Europäisches Patentamt

European Patent Office

Office européen des brevets

(11) Publication number: **0 372 901 B1**

# EUROPEAN PATENT SPECIFICATION

(45) Date of publication of patent specification: **16.02.94** (51) Int. Cl.⁵: **A01C 7/20**

(21) Application number: **89312659.9**

(22) Date of filing: **05.12.89**

(54) **Sensing and self-regulating down force system for seed drill openers.**

(30) Priority: **06.12.88 NZ 227221**

(43) Date of publication of application:
**13.06.90 Bulletin 90/24**

(45) Publication of the grant of the patent:
**16.02.94 Bulletin 94/07**

(84) Designated Contracting States:
**AT BE CH DE ES FR GB GR IT LI LU NL SE**

(56) References cited:
**EP-A- 0 266 527
FR-A- 2 540 700
FR-A- 2 547 973
US-A- 4 671 193**

(73) Proprietor: **MASSEY UNIVERSITY**

**Palmerston North(NZ)**

(72) Inventor: **Baker, Christopher John
Ngakina
Nannestad Line
Taonui
Manawatu RD. 5 Fielding(NZ)**
Inventor: **Brown, Steven Wayne
427 Ruahine Street
Palmerston North(NZ)**
Inventor: **Kernohan, Craig David
8 Woburn Place
Palmerston North(NZ)**

(74) Representative: **Johnson, Terence Leslie et al
Edward Evans & Co.
Chancery House
53-64 Chancery Lane
London WC2A 1SD (GB)**

# Description

The present invention relates to improved apparatus and methods whereby a seed drill, slurry injector, or other ground penetrative means (hereinafter simply referred to as "the ground penetrating member") can be maintained at a predetermined and substantially constant depth. An example of a ground penetrating member where constant depth is required is a seed drill. Conventionally, seed drills take the form of a variety of assemblies, sub-assemblies (hereafter "assemblies") carried from a frame or supporting the weight of a frame that is towed by a vehicle. Each such assembly normally comprises, in advance, a ground penetrating member (winged or otherwise) whether or not penetrating the ground in conjunction with or together with a disc rotatable about an axis substantially transverse (but not necessarily normal) to the direction of travel and a (normally trailing) gauge wheel, to regulate depth of penetration, and preferably adapted to also close the trench being formed by the ground penetrating means. Seed and/or other dry particulate material, fertilizer or other liquid or gaseous material including fertiliser and/or slurry can be injected into the ground in the trench as it is formed, or shortly thereafter, but prior to closure.

Openers on seed drills require some form of downforce in order to push them into the soil. This is usually derived from springs, weights, rubber buffers, air rams or hydraulic rams with either regulated pressure or cushioned oil supplied. Openers used on drills for no-tillage (direct drilling) require greater down forces than where tillage has preceded drilling, because soil strength is higher in the untilled state. Furthermore in the absence of tillage, soil in any one field varies in soil strength across the field due to natural settling and cementing processes and the action of vehicles, weather, soil fauna and vegetation. Where this occurs any seed drill opener which has a constant downforce applied to it will penetrate different depths into the soil as soil strength varies across a field since the depth of penetration is a function of the equilibrium established between downforce and the soil resistance which may increase with penetration depth.

On the assumption that variations in soil strength occur randomly across and between fields, drill designs aim to maintain a constant downforce so that at least the average seeding depth remains constant.

An aid to this end is often provided by gauging devices (wheels, skids and the like) which contact but do not penetrate the surface of the ground. By adjusting the position of the gauging device in relation to the penetrating portion of an opener, a constantly gauged depth of seeding can be achieved by ensuring the gauging device remains referenced on the surface of the soil. In practice sufficient downforce is applied to produce an excess of this force, the excess force being carried by the gauging device. The net down force is that required to just reach the target seeding depth. The excess downforce is carried by the gauging device and within limits has little affect on its function. Thus minor soil strength variations can be tolerated with the only noticeable effect being slight increases or decreases in the excess downforce carried by the gauge device. Seeding depth remains constant which is the objective.

In untilled soils, however, variations in soil strength are commonly greater than can reasonably be tolerated by normal gauge devices.

US-A-4 671 193 relates to a planting tool especially for minimum tillage operation, which has soil penetrating members comprising a leading rolling coulter and an elongate, rigid knife behind the coulter to hold open a slot cut in the soil by the coulter. Blades mounted on the vertical knife cut lateral slices in the soil extending outwardly from each side of the slot and between the soil surface and the slot bottom. A fertilizer conduit deposits a band of fertilizer in the bottom of the slot and seeds gravitate through a seed tube onto a V-shaped deflector which directs them in both directions into the lateral slices in the soil. Press wheels mounted on the knife close and recompact the soil after the seeds are planted outwardly and above the band of fertilizer in the slot. The press wheel also serves as a gauge member in conjunction with a flexible tool mount to regulate the depth of operation of the tool components relative to the soil surface. Thus irregularities encountered in the soil surface are accommodated by the flexing of the flexible mounting unit which ensures that each tool operates at all times at the appropriate depth. This apparatus, however, cannot accommodate large changes in the strength or hardness of soil strength. That is, it does not measure the strength of the soil on which the apparatus is operating and adjust the downforce on the tool to maintain a constant excess loading on the press wheel.

The present invention provides an advanceable apparatus having a plurality of opener assemblies, each, or at least some of said opener assemblies comprising:

a soil penetrating member,

a gauge member pivotally attached to the soil penetrating member, and adjustment means for altering the depth of operation of the soil penetrating member, and means for an adjustment in downforce on the soil penetrating member;

characterised in that:

sensing means are provided for sensing an uplift force of the gauge member from the ground, said sensing means being operably coupled to the gauge member;

the adjustment means is pivotally attached to the gauge member and to the soil penetrating member; and

the means for an adjustment in downforce on the soil penetrating member is responsive to the sensed uplift force on the gauge member and adjusts the downward force on the soil penetrating member so as to maintain a substantially consistent soil penetrating depth of the soil penetrating member and a substantially constant excess loading on the gauge member.

The apparatus may be a seed drill, more preferably with multiple openers.

In the preferred form of the present invention all soil penetrating members of the overall apparatus are of a similar kind and are similarly controlled.

Preferably each soil penetrating member is individually controlled.

Preferably said gauge member is a gauge wheel and preferably the soil penetrating member is a soil penetrating seed drill opener which may or may not penetrate the soil in conjunction with a disc. The downforce is preferably pneumatically or hydraulically applied using the reaction of gravity on the frame either trailing or pushing the individual assemblies as a gang in a fixed array.

The present invention further provides a method of controlling the soil penetration of opener assemblies of a seed drill characterised by:

sensing an uplift force from the soil on a gauge member which passes over the ground in the proximity of the soil penetrating member of the opener assembly; and

providing an adjustment in downforce on said soil penetrating member in response to the sensed uplift fore on the gauge member, to maintain a substantially consistent penetration depth of the soil penetrating member and a substantially constant excess loading on the gauge member.

A preferred form of the present invention will now be described with reference to the accompanying drawings, in which:

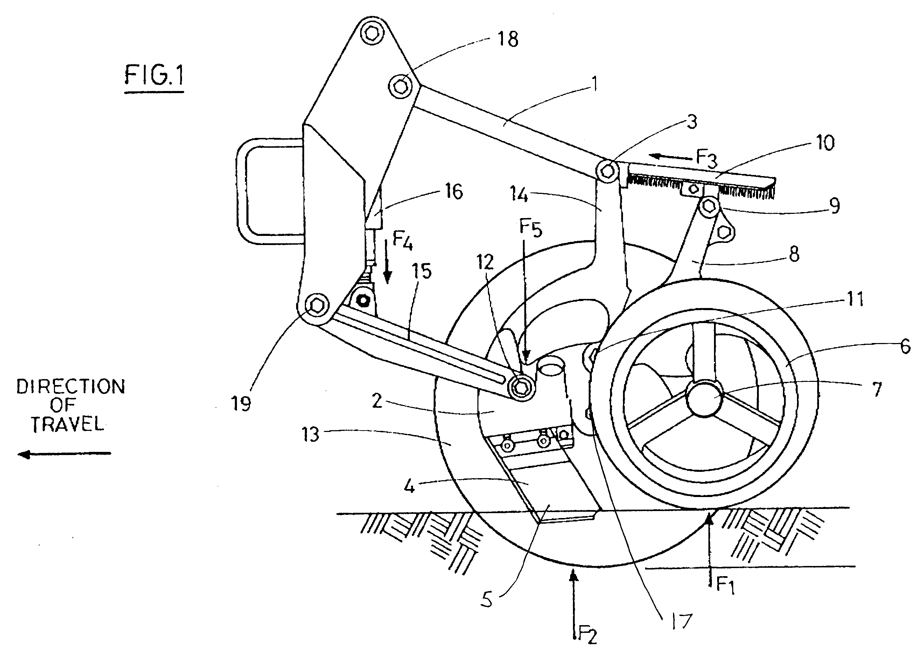

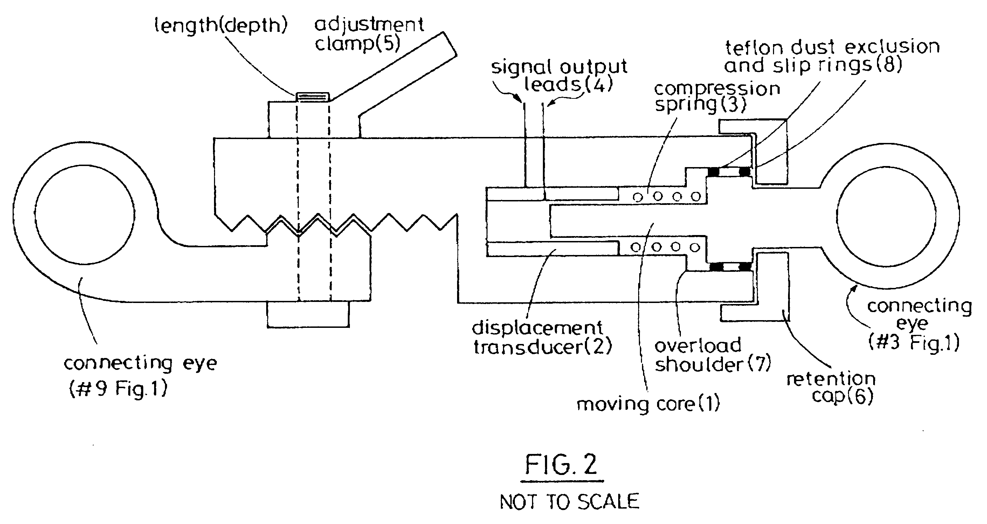

Figure 1 is a side elevation view of the seed drill opener assembly of the present invention but not showing its relationship to other such openers and/or the framing arrangements whereby the whole apparatus as a gang or array of such openers can be advanced in the direction of travel, the gauge wheel being shown rolling substantially at soil level with the soil opener (comprising a disc which penetrates to below the seeding depth and the opener proper which penetrates more or less exactly to the seeding depth) extending therebelow, such arrangements of disc, seed opener proper and gauge wheel being preferably as known.

In the preferred form of the present invention the device as depicted in Figure 1 seeks to monitor the actual excess loading on the gauge devices and to use this information to continually adjust the gross downforce on each opener either collectively or separately so that any one opener or alternatively, all openers, not only maintains constant seeding depth but also maintains constant excess loading on the gauging device. The latter function is particularly important where the gauging device has the additional function of closing the groove over the seed or pressing the soil around the seed.

In Figure 1 can be seen a pair of bars or like members 1 and 15 from which the seed drill opener assembly 2 can be pivoted at 3 and 12 and which themselves are pivoted at 18 and 19. Seed drill opener assembly carriers a ground penetrating member 4 preferably having wings or the like vanes 5, said ground penetrating member 4, 5 being adapted to release seed or to advance just in front of the dropping of seed in the trench being momentarily formed prior to closure by one or preferably several gauge wheels 6. The gauge wheel or wheels 6 (which can, of course, be substituted by a skid, roller or the like) are preferably rotationally attached at 7 by an axle to a bracket member 8 which is pivotally attached at 9 to an adjustment arrangement 10 which has its other end pivotally attached at 3 to a rigid arm or extension 14 of the opener assembly 2. The bracket 8 is also pivoted at 11 to the opener 2. The opener 2 has pivot axis 17 with the disc 13.

In operation, therefore, it can be seen that adjustment of the height of the gauge wheel relative to the soil penetrating member 4 can be made by means of arrangement 10, thus setting a desired soil depth. The geometry, however, is such that while there is no folding to any substantial degree of this structure under load, there is a vertical force $F_1$ acting upwards on the gauge wheel 6 relative to the ground. This force $F_1$ results in a compressive force $F_3$ acting in the adjustment device 10 since the entire assembly 8 pivots about a fulcrum at 11. It is in response to this force $F_3$ that some adjustment is made to the downward force $F_4$ received by the assembly from an air or hydraulic cylinder 16.

Assuming the downforce on the seed drill opener sub-assembly by the frame from which it is dependent is force $F_5$, the combined upforce from the soil on the disc 13 and soil penetrating member 4, 5 is $F_2$, and the upforce on the gauge wheel is $F_1$. For equilibrium $F_5 = F_1 + F_2$. Should for any reason $F_2$ be increased (e.g. harder soil) $F_1$ must decrease if $F_5$ remains constant. The present invention, however, is a tactile system detecting changes in $F_2$ preferably by reference to the vertical force or deflections of the gauge wheel under the effect of uplift load $F_1$ as reflected by the changing magnitude of the compressive force $F_3$ in adjuster 10, and then compensating for any change in $F_1$ (less any deflection of the gauge wheel that must be taken into account) by altering the pressure in and thus force $F_4$ from the hydraulic or air cylinder 16 thereby changing the downforce $F_5$ and thereafter constantly monitoring the system and making appropriate changes as might be necessary. The system thereby maintains $F_3$ and thereby $F_1$ constant by varying $F_4$ and thus $F_5$ in response to changes in $F_2$.

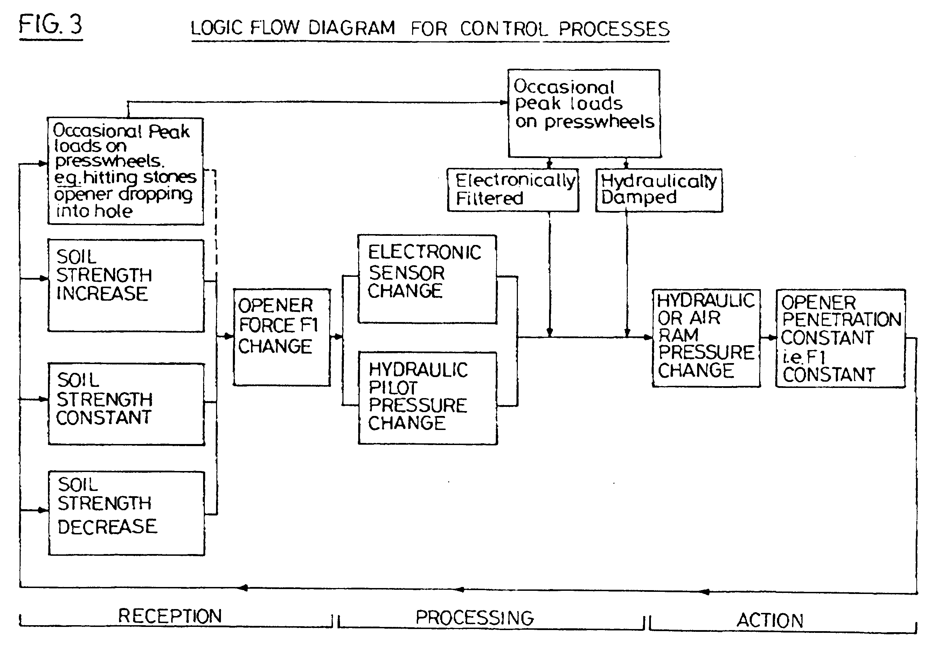

Preferably the downforce mechanism at least for providing changes to $F_4$ consists of individual air or hydraulic rams on individual (or clusters of) openers. Preferably these rams can draw air or oil from pre-pressured sources. Preferably the mechanical linkages 10 which affix the gauge devices to the openers include strain gauges, displacement transducers, pilot rams or other such sensors that can measure the loading on the gauge device. These signals are then used to open or close supply or exit ports to the rams so as to continuously adjust the gross downforce on the opener in order to maintain the excess force on the gauging device, $F_1$ substantially constant. The logic flow path is shown in Fig. 3.

In its simplest form, the system uses one or more opener assemblies or a plurality of assemblies on a drill to monitor and sample changes in general soil strength across the width of the drill, and adjusts the common pressure to all rams so that all openers can respond in like manner to the general change in soil strength.

In its most sensitive form each individual opener monitors the changes in soil strength which it alone encounters and adjusts the pressure to its ram in isolation, so as to compensate for changes in soil strength in that soil zone alone while independent adjustments are being made by all other opener assemblies in the cluster of assemblies attached to the seed drill, to compensate for their particular changes of soil strength in their operating zones.

The system is not restricted to the opener configuration shown in Fig 1. Any opener assembly which has a depth gauging device, the net loading on which could be monitored electronically, hydraulically, pneumatically or mechanically can be adapted to operate with either the simple form or the sensitive form of the system described. Nor is it necessary for the opener to be attached by two parallel arms to the drill frame. The more usual attachment is a single arm.

The invention utilizes the information provided from monitoring the net or overload forces experienced by the gauging devices in order to control the gross downforce in all or any of the openers on a seed drill so that a predetermined and consistent depth of operation in the soil is maintained together with a predetermined and consistent loading on the gauging devices regardless of changes in soil strength. The novel system also has built into the monitoring function, a means of predetermining the desirable loading in the gauge devices since different soils require different closure pressures. Having predetermined the desirable loading however, the system then maintains that value automatically.

The sensors required to provide the information are designed around standard devices for measuring force or displacement. An example of the latter, monitored electronically is shown in Fig 2. The flow of logic required to utilize the information is shown in Fig 3. When using hydraulically piloted signals in the form of oil pressure, the flexibility in filtering the logic is somewhat more restrictive as shown in Fig 3 compared with electronic processing of the information.

Referring to Figures 2 and 1, the connecting eyes at either end of the adjustment arrangement 10 (Fig 1) are connected to the opener 2 (Fig 1) at 3, and to the gauge wheel assembly 8 (Fig 1) at 9. In Figure 2, compressive loads on the device displace the moving core 1 (Fig 2) in a displacement transducer 2 (Fig 2), by deflecting the preloaded compression spring 3 (Fig 2). The sensing device preferably is either not compressible or is compressible only to a limited extent. In the example shown in Fig 2, a small amount of compressibility is tolerated in order to facilitate the use of an inexpensive displacement transducer. An alternative and more expensive option would be a load cell. The signal is relayed for processing within the electronic intelligence through the signal leads 4 (Fig 2). The electronic intelligence in turn controls the supply of oil to and from the downforce ram 16 (Fig 1). The length (depth) adjustment clamp 5 (Fig 2) is not related to the functioning of the sensor. It is the means of altering the basic depth of operation of the entire opener assembly.

Because the opener is periodically and intentionally lifted from the ground for transportation, the assembly shown in Fig 2 periodically operates in tension while it supports the weight of the gauging assembly. No monitoring is required in this tension mode. A retention cap 6 (Fig 2) is sufficient for this function.

Occasionally the gauge wheels ride over a stone, unintentionally drawing the entire assembly out of the ground, at which time all of the downforce $F_5$ (Fig 1) is transferred to the gauge device resulting in excessive force or overload in the assembly shown in Fig 2. While the electronic intelligence, or hydraulic piloting, can be adjusted to largely ignore such peak signals, an overload shoulder 7 (Fig 2) is provided to prevent damage to the displacement transducer.

Teflon or similar slip rings 8 (Fig 2) serve to exclude dust while reducing hysteresis from friction to a minimum.

Example

An opener travelling in a given soil requires 100 kg of downforce to achieve 40 mm penetration depth.

The gauge wheels (which also close the seed groove) require 20 kg to perform their closure function. They are positioned so that when they are in contact with the ground and loaded to 20 kg. the penetration (and thus seeding) depth is maintained at 40 mm.

The gross downforce required is thus 120 kg.

120 kg downforce is provided by a given hydraulic ram of area 0.001 m$^2$ operating at an oil pressure of 120,000 kg/m$^2$.

The opener encounters harder soil (of increased soil strength) which would require 150 kg of downforce to maintain 40 mm penetration depth. The additional 20 kg closure force required by the gauge wheels means the new total gross force required is now 170 kg.

Without adjustment to the oil pressure the opener would instead travel at a shallower depth in order to re-establish an equilibrium. The gauge wheels would ride clear of the ground. In our novel system, as soon as the opener commences operating at a shallower depth (even a few mm), the loading on the gauge wheels will decrease below 20 kg. The gauge wheel sensing device will immediately signal the control valves to increase the oil pressure supply to the rams. This oil pressure will rise until it reaches 170,000 kg/m$^2$ at which point it will provide 170 kg of downforce (which will then reinstate the 20 kg of net force on the gauge wheels). The new force thereby maintains seeding depth at 40 mm regardless of the change in soil strength. This is the primary function of the system.

The sensitivity of the system will be adjustable so that change in soil strength can be detected at any predetermined interval.

Limitations

At other times when soil strength is constant, openers are required to rise and fall every few mm in order to follow ground contour without altering the air or hydraulic pressure. In these circumstances oil is supplied to or discharged from the rams at constant pressure in order to alter their displacement rather than their force. This can be achieved achieved either by a cushioned constant oil pressure, or by the controls which our system provides.

Because it would likely require an unrealistically frequent duty cycle on components to be supplying and discharging oil or air continuously by continuous opening and closing of ports, the soil strength sensitive system described above will preferably work together with a gas- or spring-cushioned supply of oil in each ram; or using air rams because air itself is compressible and would provide this cushion function automatically.

The present invention, therefore, relates to a system of using a gauge means or device to sense the magnitude of downforce less than or additional to that already required to establish equilibrium seeding depth to maintain that equilibrium i.e. using the signal to change the gross downforce so that a constant uplift force on the gauging device results, regardless of changes in soil strength and within the limits of the maximum fluid pressure available for creating gross downforce in the first place.

**Claims**

1. An advanceable apparatus having a plurality of opener assemblies, each, or at least some of said opener assemblies comprising:

   a soil penetrating member (4,5,13),

   a gauge member (6) pivotally attached (11) to the soil penetrating member, adjustment means (10,) for altering the depth of operation of the soil penetrating member, and means (16) for an adjustment in downforce on the soil penetrating member;

   characterised in that:

   sensing means (10) are provided for sensing an uplift force of the gauge member from the ground, said sensing means being operably coupled to the gauge member;

   the adjustment means (10,) is pivotally attached (9) to the gauge member and (3) to the soil penetrating member; and

   the means for an adjustment in downforce on the soil penetrating member is responsive to the sensed uplift force on the gauge member and adjusts the downward force on the soil penetrating member so as to maintain a substantially consistent soil penetrating depth of the soil penetrating member and a substantially constant excess loading on the gauge member.

2. Apparatus as claimed in claim 1 characterised in that said advanceable apparatus is an implement capable of being advanced by towing or pushing by a powered vehicle.

3. Apparatus as claimed in either preceding claim wherein said opener assemblies are carried as a fixed array from a frame capable of being trailed or pushed by a powered vehicle.

4. Apparatus as claimed in claim 2 or 3 characterised in that said apparatus is a seed drill.

5. Apparatus as claimed in claim 4 characterised in that the seed drill has multiple opener assemblies as defined in claim 1.

6. Apparatus as claimed in any preceding claim characterised in that each said soil penetrating member is a soil penetrating seed drill opener.

7. Apparatus as claimed in claim 6 characterised in that said drill opener penetrates the soil in conjunction with a disk.

8. Apparatus as claims in any preceding claim characterised in that said gauge member is a gauge wheel.

9. Apparatus as claimed in claim 8 characterised in that said gauge wheel acts in use to close a trench opened by said soil penetrating member.

10. Apparatus as claimed in any preceding claim characterised in that the downward force is applied pneumatically or hydraulically against the weight on a frame carrying the opener assemblies.

11. A method of controlling the soil penetration of opener assemblies of a seed drill characterised by:

sensing an uplift force from the soil on a gauge member which passes over the ground in the proximity of the soil penetrating member of the opener assembly; and

providing an adjustment in downforce on said soil penetrating member in response to the sensed uplift fore on the gauge member, to maintain a substantially consistent penetration depth of the soil penetrating member and a substantially constant excess loading on the gauge member.

**Patentansprüche**

1. Vorwärts bewegbare Vorrichtung mit einer Mehrzahl an Öffneraufbauten, wobei von diesen Öffneraufbauten alle bzw. zumindest einige folgendes umfassen:

ein in den Boden eindringendes Glied (4, 5, 13),

ein Meßglied (6), welches bei (11) an dem in den Boden eindringenden Glied schwenkbar angebracht ist, eine Einstelleinrichtung (10) zur Änderung der Arbeitstiefe des in den Boden eindringenden Gliedes, und eine Einrichtung (16) zur Einstellung der abwärts gerichteten Kraft auf das in den Boden eindringende Glied;

dadurch gekennzeichnet, daß

eine Tasteinrichtung (10) dafür vorgesehen ist, eine anhebende Kraft des Meßgliedes vom Boden zu erfassen, wobei die Tasteinrichtung betriebsmäßig mit dem Meßglied verkuppelt ist;

die Einstelleinrichtung (10) bei (9) an dem Meßglied und bei (3) an dem in den Boden eindringenden Glied schwenkbar angebracht ist; und

die Einrichtung zur Einstellung der abwärts gerichteten Kraft auf das in den Boden eindringende Glied auf die erfaßte anhebende Kraft auf das Meßglied anspricht und die abwärts gerichtete Kraft auf das in den Boden eindringende Glied so einstellt, daß eine im wesentlichen gleichbleibende Boden-Eindringtiefe des in den Boden eindringenden Gliedes und eine im wesentlichen konstante Überschußlast auf das Meßglied aufrechterhalten wird.

2. Vorrichtung nach Anspruch 1, dadurch gekennzeichnet, daß die vorwärts bewegbare Vorrichtung ein Gerät ist, das durch Schleppen oder Schieben durch ein Kraftfahrzeug vorwärts bewegt werden kann.

3. Vorrichtung nach den beiden vorhergehenden Ansprüchen, bei der die Öffneraufbauten als eine feststehende Anordnung von einem Rahmen getragen werden, welcher durch ein Kraftfahrzeug gezogen oder geschoben werden kann.

4. Vorrichtung nach Anspruch 2 oder 3, dadurch gekennzeichnet, daß die Vorrichtung eine Sämaschine ist.

5. Vorrichtung nach Anspruch 4, dadurch gekennzeichnet, daß die Sämaschine eine Vielzahl von Öffneraufbauten wie in Anspruch 1 definiert aufweist.

6. Vorrichtung nach einem der vorhergehenden Ansprüche, dadurch gekennzeichnet, daß jedes der in den Boden eindringenden Glieder ein in den Boden eindringender Säfurchenöffner ist.

7. Vorrichtung nach Anspruch 6, dadurch gekennzeichnet, daß der Furchenöffner in Verbindung mit einer Scheibe in den Boden eindringt.

8.  Vorrichtung nach einem der vorhergehenden Ansprüche, dadurch gekennzeichnet, daß das Meßglied eine Radstelze ist.

9.  Vorrichtung nach Anspruch 8, dadurch gekennzeichnet, daß die Radstelze beim Gebrauch so wirkt, daß sie einen von dem in den Boden eindringenden Glied geöffneten Graben schließt.

10. Vorrichtung nach einem der vorhergehenden Ansprüche, dadurch gekennzeichnet, daß die abwärts gerichtete Kraft pneumatisch oder hydraulisch gegen das Gewicht auf einen die Öffneraufbauten tragenden Rahmen ausgeübt wird.

11. Verfahren zur Steuerung des Eindringens in den Boden der Öffneraufbauten einer Sämaschine, gekennzeichnet durch:

das Erfassen einer anhebenden Kraft vom Boden auf ein Meßglied, welches sich in der Nähe des in den Boden eindringenden Gliedes des Öffneraufbaus über den Boden bewegt; und

das Vorsehen einer Einstellung der abwärts gerichteten Kraft auf das in den Boden eindringende Glied ansprechend auf die erfaßte anhebende Kraft auf das Meßglied, um eine im wesentlichen gleichbleibende Eindringtiefe des in den Boden eindringenden Gliedes und eine im wesentlichen konstante Überschußlast auf das Meßglied aufrechtzuerhalten.

**Revendications**

1.  Appareil capable d'avancer ayant une pluralité d'ensembles à ouvreuse, chacun ou au moins certains desdits ensembles à ouvreuse comprenant :

un membre de pénétration de la terre (4, 5, 13),

un membre de mesure (6) attaché sur pivot (11) au membre de pénétration de la terre, un moyen d'ajustement (10) pour modifier la profondeur de travail du membre de pénétration de la terre, et un moyen (16) pour un ajustement en force descendante sur le membre de pénétration de la terre ;

caractérisé en ce que :

des moyens capteurs (10) sont prévus pour capter une force d'élévation du membre de mesure depuis le sol, lesdits moyens capteurs étant couplés en opération au membre de mesure ;

le moyen d'ajustement (10) est attaché de manière pivotable (9) au membre de mesure et (3) au membre de pénétration de la terre ; et

le moyen pour un ajustement de force descendante sur le membre de pénétration de la terre est sensible à la force d'élévation captée sur le membre de mesure et ajuste la force descendante sur le membre de pénétration de la terre de manière à maintenir une profondeur de pénétration de la terre sensiblement constante du membre de pénétration de la terre et une charge en excès sensiblement constante sur le membre de mesure.

2.  Appareil selon la revendication 1, caractérisé en ce que ledit appareil capable d'avancer est une machine capable d'avancer en étant remorquée ou poussée par un véhicule à moteur.

3.  Appareil selon l'une ou l'autre des revendications précédentes, dans laquel lesdits ensembles à ouvreuse sont portés comme un agencement fixe à partir d'un bâti capable d'être tiré ou poussé par un véhicule à moteur.

4.  Appareil selon la revendication 2 ou 3, caractérisé en ce que ledit appareil est un semoir en lignes.

5.  Appareil selon la revendication 4, caractérisé en ce que le semoir en lignes possède de multiples ensembles à ouvreuse comme définis à la revendication 1.

6.  Appareil selon une revendication précédente quelconque, caractérisé en ce que chaque dit membre de pénétration de la terre est une ouvreuse de semoir en lignes de pénétration de la terre.

7.  Appareil selon la revendication 6, caractérisé en ce que ladite ouvreuse de semoir pénètre la terre en conjonction avec un disque.

8.  Appareil selon les revendications dans une revendication précédente quelconque, caractérisé en ce que ledit membre de mesure est un support de charrue.

9.  Appareil selon la revendication 8, caractérisé en ce que ledit support de charrue agit en cours d'usage pour fermer une tranchée ouverte par ledit membre de pénétration de la terre.

10. Appareil selon une revendication précédente quelconque, caractérisé en ce que la force descendante est appliquée pneumatiquement ou hydrauliquement contre le poids sur un bâti portant les ensembles à ouvreuse.

11. Méthode de contrôle de la pénétration de la terre par les ensembles à ouvreuse d'un semoir en lignes, caractérisée par les étapes de :

capter une force d'élévation depuis la terre sur un membre de mesure qui passe au-dessus du sol à proximité du membre de pénétration de la terre de l'ensemble a ouvreuse ; et

prévoir un ajustement en force descendante sur ledit membre de pénétration de la terre en réponse à la force d'élévation captée sur le membre de mesure, pour maintenir une profondeur de pénétration sensiblement constante du membre de pénétration de la terre et une charge en excès sensiblement constante sur le membre de mesure.

FIG.1

FIG. 2

NOT TO SCALE

# FIG. 3

LOGIC FLOW DIAGRAM FOR CONTROL PROCESSES

RECEPTION  |  PROCESSING  |  ACTION

EP 0 372 901 B1